# FASCICULE DE BREVET EUROPEEN

(11) **EP 2 651 764 B1**
(45) Date de publication et mention de la délivrance du brevet: **14.12.2016**
(21) Numéro de dépôt: 11802482.7
(22) Date de dépôt: 18.11.2011
(51) Int. Cl.: B64D 29/06, F02K 1/70

(54) **NACELLE POUR TURBOREACTEUR D'AERONEF DOUBLE FLUX**
GONDEL FÜR EINE BYPASSGASTURBINE
NACELLE FOR A BYPASS TURBOJET ENGINE

(30) Priorité: 14.12.2010 FR 1060478
(43) Date de publication de la demande: 23.10.2013
(73) Titulaire: Aircelle, 76700 Gonfreville L'Orcher (FR)
(72) Inventeur: GONIDEC, Patrick, F-31530 Bretx (FR); BELLANGER, Alexandre, F-76600 Le Havre (FR)
(74) Mandataire: Gaillarde, Frédéric F. Ch.
(86) Numéro de dépôt international: PCT/FR2011/052706
(87) Numéro de publication internationale: WO 2012/080604

(56) Documents cités:
- EP-A1- 0 771 945
- EP-A1- 0 852 290
- US-A- 3 344 604

## Description

La présente invention se rapporte à une nacelle pour un turboréacteur d'aéronef double flux ainsi qu'à un aéronef comportant une telle nacelle.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire d'axe longitudinal comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur (voir par exemple le document EP0852290).

La nacelle comporte également typiquement un sommet destiné à recevoir un pylône d'attache permettant le fixer la nacelle et le turboréacteur à une aile de l'aéronef.

On entend ici par le terme « aval » la direction correspondant au sens du flux d'air froid pénétrant dans le turboréacteur. Le terme « amont » désigne la direction opposée.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine ».

Un turboréacteur comporte usuellement une partie dite « amont » comprenant les pales de la soufflante et une partie dite « aval » abritant le générateur de gaz.

La section aval de la nacelle pour un tel moteur présente généralement une structure externe, dite Outer Fixed Structure (OFS) et une structure interne concentrique, dite Inner Fixed Structure (IFS), entourant la structure du moteur proprement dite à l'aval de la soufflante. Les structures interne et externe définissent une veine destinée à canaliser le flux d'air froid qui circule à l'extérieur du moteur. La structure externe comporte dans certains cas un inverseur de poussée comprenant un ou plusieurs capots coulissants suivant l'axe longitudinal de la nacelle entre une position permettant l'échappement d'un flux d'air inversé et une position empêchant un tel échappement.

Un tel inverseur de poussée permet, grâce au flux d'air inversé, de réduire la distance de freinage de l'aéronef à l'atterrissage.

Une aile d'avion est par ailleurs généralement équipée de becquets qui permettent de diriger l'aéronef. Un becquet est situé sur la face avant de l'aile. Lorsqu'un becquet est en position abaissée, ce dernier devient très proche de la nacelle, notamment au niveau de l'attache de cette dernière sous l'aile de l'aéronef, uniquement d'un côté de la nacelle.

Ceci risque d'engendrer une interférence physique, et aérodynamique avec le capot coulissant de l'inverseur de poussée, lorsque celui-ci coulisse vers sa position d'inversion de poussée.

Une solution proposée pour supprimer cette interférence est de rendre fixe la partie supérieure de la nacelle, à savoir le sommet de cette dernière correspondant à la zone d'attache de la nacelle sous l'aile de l'aéronef, tout en élargissant la structure interne fixe.

L'aéronef étant symétrique, toutes les nacelles montées sur ce dernier présentent ce phénomène d'interférence si bien que toutes les nacelles présentent une zone fixe par rapport à l'inverseur de poussée de part et d'autre du sommet de la nacelle.

La zone fixe de la nacelle ne participe donc pas aux performances de l'inversion de poussée. Afin de compenser cet inconvénient, il est nécessaire d'augmenter la longueur de course de l'inverseur de poussée.

Une telle modification engendre une augmentation de la masse de la nacelle et également une diminution de l'efficacité de la contre-poussée.

Un but de la présente invention est donc de fournir une nacelle ne présentant pas les inconvénients précités.

A cet effet, selon un premier aspect, la présente invention a pour objet un aéronef comportant une aile et une nacelle pour un turboréacteur d'aéronef double flux reliées par un pylône d'attache, la nacelle comportant une section amont par laquelle un flux d'air est destiné à pénétrer, une section médiane destinée à entourer la soufflante du turboréacteur et une section aval comprenant une structure interne et une structure externe délimitant une veine adaptée pour faire circuler le flux d'air, la structure externe comprenant au moins un capot monté sur la structure interne et mobile suivant un axe longitudinal de la nacelle de sorte à permettre l'évacuation d'au moins une partie du flux d'air circulant dans la veine lors d'une phase d'inversion de poussée de la nacelle, la nacelle présentant également un sommet destiné à recevoir un pylone d'attache d'une aile de l'aéronef,
ladite nacelle comprenant :
- au moins un premier panneau monté sur la structure interne d'un côté de la nacelle, par rapport au sommet, qui est disposé à proximité d'un élément de l'aile de sorte à subir une interférence physique avec l'élément de l'aile, pour limiter l'interférence physique dudit capot avec ledit élément d'aile tors d'une inversion de poussée, et - au moins un second panneau monté de l'autre côté de la nacelle, par rapport au sommet, ce panneau étant configuré de sorte à permettre l'évacuation d'une partie du flux d'air pour maximiser l'air évacué de cet autre côté de la nacelle lors d'une inversion de poussée.

Grâce à la présence des premier et second panneaux, la nacelle de l'invention permet de manière avantageuse d'augmenter la surface disponible pour le flux d'air évacué lors d'une inversion de poussée, notamment du côté de la nacelle où ce flux d'air ne rencontre pas d'interférence avec certains éléments de l'aile. Il n'est donc plus nécessaire d'augmenter la masse de la nacelle ou de diminuer la performance de contre-poussée.

Selon d'autres caractéristiques de l'invention, la nacelle de l'invention comporte l'une ou plusieurs des caractéristiques optionnelles suivantes considérées seules ou selon toutes les combinaisons possibles :
- ledit premier panneau est sélectionné dans le groupe comprenant : un panneau fixé à la structure interne fixe et fixe ou au moins en partie mobile par rapport à cette structure interne fixe, et un panneau fixé audit capot mobile et fixe ou au moins en partie mobile par rapport à ce capot mobile ;
- ledit second panneau est sélectionné dans le groupe comprenant : un panneau fixé au capot mobile, un panneau fixé à la structure interne et comprenant au moins une partie mobile par rapport à cette structure interne, et un panneau monté mobile sur ledit capot mobile ;
- le second panneau est solidaire dudit capot mobile : ceci permet de manière simple et efficace d'augmenter la surface de sortie du flux d'air dévié sur un côté de la nacelle ;
- un moyen de détrompage est prévu pour indiquer sur la nacelle la position du second panneau, ce qui permet de simplifier le montage ;
- le premier panneau et/ou le second panneau comportent au moins une partie mobile configurée pour passer d'une position de fermeture empêchant l'échappement d'une partie du flux d'air à une position d'ouverture autorisant un tel échappement, ce qui permet d'augmenter encore d'avantage la surface d'échappement du flux d'air ;
- la partie mobile du premier panneau et/ou du second panneau est configurée pour prendre plusieurs positions intermédiaires, ce qui permet d'adapter le flux d'air dévié notamment en fonction de l'interférence subie ;
- la partie mobile est montée pivotante sur la structure interne autour d'un axe sensiblement parallèle à l'axe de la nacelle,
- la partie mobile est reliée à ladite structure interne par des charnières et plusieurs bielles dont au moins une première bielle est fixée sur la partie mobile et sur le capot mobile et une deuxième bielle est fixée sur la partie mobile et sur la structure interne ;
- la partie mobile est montée pivotante sur la peau extérieure dudit capot mobile et vers l'intérieur de cellui-ci, autour d'un axe choisi dans le groupe comprenant un axe sensiblement parallèle, et un axe sensiblement pependiculaire, à l'axe de la nacelle ;
- ladite partie mobile est solidaire de la peau externe dudit capot mobile, et mobile de par son élasticité ;
- ladite partie mobile est guidée par des moyens sélectionnés dans le groupe comprenant un rail et une bordure solidaires d'une poutre située au sommet de ladite nacelle ;
- les premier et second panneaux sont de forme sensiblement symétrique par rapport au sommet de la nacelle, ce qui permet d'avoir des panneaux très facilement interchangeables simplifiant l'installation et la maintenance de la nacelle.

Selon un autre aspect, la présente invention a pour objet un aéronef comportant une aile et une nacelle selon l'invention reliées par un pylône d'attache.

L'invention sera davantage comprise à la lecture de la description non limitative qui va suivre, faite en référence aux figures ci-annexées.
- la figure 1 est une coupe schématique partielle d'un mode de réalisation d'une nacelle de l'invention ;
- les figures 2 et 3 sont des vues schématiques en perpespective sur le dessus d'un premier mode de réalisation de la nacelle de l'invention ;
- la figure 4 est un agrandissement de la zone IV vue en dessous du second panneau et du capot mobile du mode de réalisation de la nacelle de la figure 2 ;
- les figures 5 à 9 sont des vues schématiques en perpespective sur le dessus d'un second mode de réalisation de la nacelle de l'invention ;
- la figure 10 est une vue en perspective sensiblement de face d'une partie de la structure interne du mode de réalisation de la nacelle de la figure 5 ;
- la figure 11 est une vue en perspective sensiblement de face de la partie mobile de la structure interne du mode de réalisation de la nacelle de la figure 5 ;
- la figure 12 est une vue en perspective sensiblement de côté d'une partie de la structure interne du mode de réalisation de la nacelle de la figure 10 ;
- la figure 13 est une vue en perspective sensiblement de côté d'une partie du capot mobile du mode de réalisation de la nacelle de la figure 5;
- la figure 14 est une vue en perspective sensiblement de côté du mode de réalisation représenté à la figure 5 lorsque la partie mobile 136b est disposée de sorte à permettre l'échappement d'une partie du flux d'air ;
- les figures 15 et 16 sont des vues en perpective d'un autre mode de réalisation de l'invention, dans des configurations respectivement normale et d'inversion de poussée ;
- les figures 17 et 18 sont des vues schématiques de moyens de guidage du panneau mobile des figures 15 et 16 ;
- la figure 18a représente une variante du détail de la zone Z de la figure 18 ;
- les figures 19 à 25 sont des vues schématiques d'autres moyens de guidage du panneau mobile des figures 15 et 16, et
- les figures 26 et 27 sont des vues en perspective analogues à celles des figures 15 et 16, d'encore un autre mode de réalisation de l'invention.

On a représenté sur ces figures un trièdre orthogonal X, Y, Z, dont les directions sont respectivement parallèle à l'axe de la nacelle, perpendiculaire à cet axe et à la verticale, et verticale.

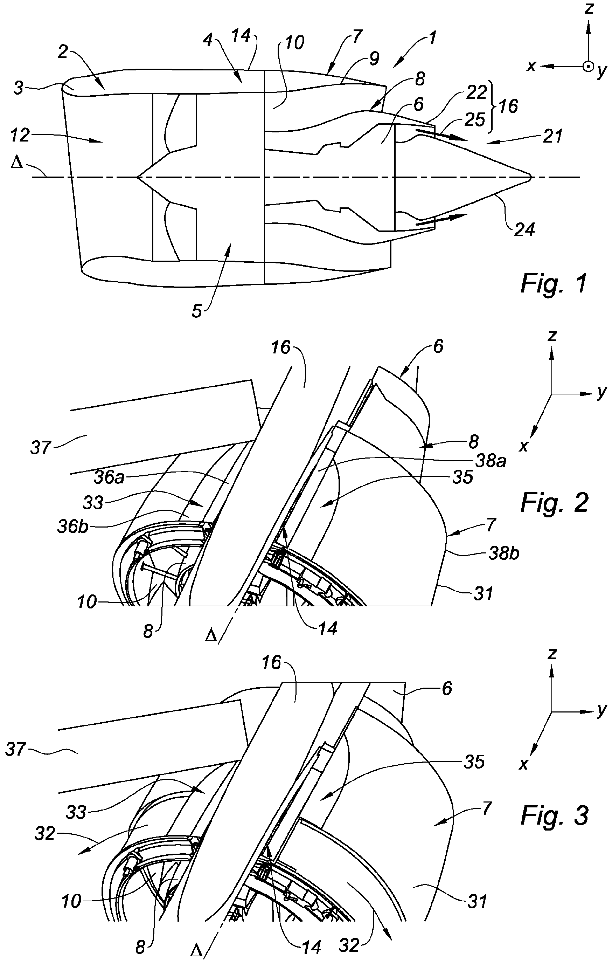

Comme représenté sur la figure 1, une nacelle 1 selon l'invention présente une forme sensiblement tubulaire selon un axe longitudinal Δ (direction parallèle à X). La nacelle de l'invention 1 comprend une section amont 2 avec une lèvre d'entrée d'air 3, une section médiane 4 entourant une soufflante 5 d'un turboréacteur 6 et une section aval 7. La section aval 7 comprend une structure interne 8 (encore appelée « inner fixed structure » ou « IFS ») entourant la partie amont du turboréacteur 6, une structure externe (encore appelée « outer fixed structure » ou « OFS ») 9 et un capot mobile (non représenté) comportant des moyens d'inversion de poussée. La structure interne ou IFS 8 ainsi que la structure externe ou OFS 9 sont fixes par rapport au capot mobile.

L'IFS 8 et l'OFS 9 délimite une veine 10 permettant le passage d'un flux d'air 12 pénétrant la nacelle 1 de l'invention au niveau de la lèvre d'entrée d'air 3.

La nacelle de l'invention 1 comporte un sommet 14 destiné à recevoir un pylône 16 d'attache permettant de fixer ladite nacelle 1 à une aile de l'aéronef (non représenté). Pour ce faire, ledit sommet 14 comporte des moyens (non représentés) pour fixer ledit pylône 16.

La nacelle 1 de l'invention se termine par une tuyère d'éjection 21 comprenant un module externe 22 et un module interne 24. Les modules interne 24 et externe 22 définissent un canal d'écoulement de flux d'air primaire 25, dit chaud, sortant du turboréacteur 6.

Comme représenté sur la figure 2, l'OFS 9 comprend au moins un capot 31 monté sur l'IFS 8 et mobile suivant l'axe longitudinal Δ de sorte à permettre l'évacuation du flux d'air 12 circulant dans la veine 10 lors d'une phase d'inversion de poussée.

La nacelle de l'invention 1 comprend au moins un premier panneau 33 fixe par rapport à l'IFS 8 et fixé à cette dernière 8 du côté, par rapport au sommet 14, destiné à être à proximité de l'aile et un second panneau 35 mobile par rapport à l'IFS 8 et fixé à cette dernière 8 ou au capot mobile 31 du côté, par rapport au sommet 14, destiné à être à distance de l'aile, les premier et second panneaux 33 et 35 étant montés de part et d'autre du sommet 14. Le second panneau 35 est configuré de sorte à permettre l'évacuation d'une partie du flux d'air 12.

Autrement dit, lorsque le flux d'air 12 circulant dans la veine 10 est dévié par les moyens d'inversion de poussée de la nacelle 1 de l'invention, une partie de ce flux d'air dévié passe dans le passage dégagé par le capot mobile 31 dans sa position déployé et une autre partie par le passage dégagé par le second panneau mobile 35. De ce fait, une plus grande partie du flux d'air 32 peut ainsi être évacuée.

L'aile (non représentée) de l'aéronef sur laquelle est attachée la nacelle 1 de l'invention comporte typiquement des éléments pouvant provoquer des interférences avec le capot mobile 31. A titre d'exemple, on peut citer des becquets 37 facilitant l'atterissage et le freinage de l'aéronef (voir les figures 2,3 et 5 à 9). Les becquets 37 ne sont pas présents de chaque côté de la nacelle 1 de l'invention.

Dans la nacelle 1 de l'invention, le premier panneau 33 est disposé de sorte à être à proximité ou sous le becquet de l'aile lorsque la nacelle est monté sur l'aile. Autrement dit, pour une aile gauche lorsque l'on regarde l'aéronef de face, le premier panneau 33 est monté à gauche du sommet 14 de la nacelle de l'invention lorsque l'on regarde cette dernère de face, à savoir face à l'entrée d'air.

Pour une aile droite, lorsque l'on regarde l'aéronef de face, le premier panneau 33 est monté à droite du sommet 14 de la nacelle de l'invention lorsque l'on regarde cette dernière 1 de face, à savoir face à l'entrée d'air. Le second panneau 35 est monté à droite dans le premier cas de figure et à gauche dans le second cas de figure.

La nacelle de l'invention 1 permet de manière avantageuse de conserver la surface disponible pour le flux d'air dévié 32 du côté du sommet 14 où il existe une interférence physique entre la nacelle et certains éléments de l'aile. Il n'est donc plus nécessaire d'augmenter la masse de la nacelle ou de diminuer la performance de contre-poussée.

De préférence, le premier panneau 33 est monté sur l'IFS 8 du côté de la nacelle 1 de l'invention par rapport au sommet 14 destiné à présenter une interférence physique ou un encombrement avec un élément de l'aile, dans le cas présent un becquet 37, plus importante que le côté où est monté le second panneau 35 mobile.

Les premier et second panneaux 33 et 35 peuvent être de toute forme adaptée à la quantité du flux d'air dévié 32 et, notamment de forme complémentaire au capot mobile 31. Comme représenté sur les figures, le premier panneau fixe 33 et le second panneau mobile 35 peuvent avoir une forme oblongue.

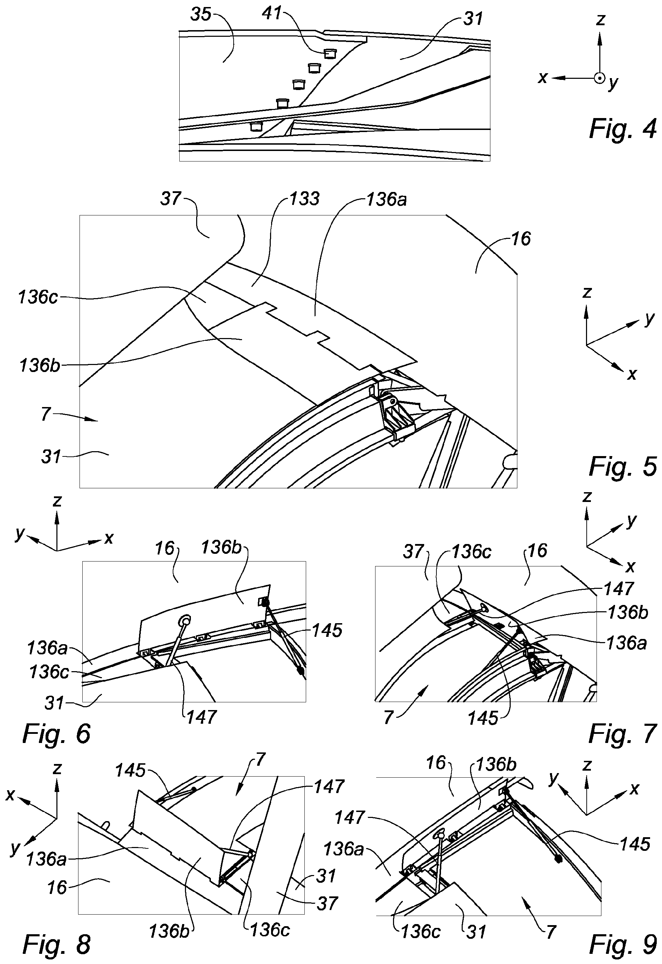

Selon un mode de réalisation représenté aux figures 2 à 4, le second panneau 35 est mobile en translation suivant l'axe longitudinal Δ de la nacelle ce qui permet de manière simple et efficace d'augmenter la surface de sortie du flux d'air dévié 32 sur un côté de la nacelle 1 de l'invention. Pour ce faire, le second panneau 35 est fixé solidairement au capot mobile 31 par des moyens de fixation, tels que des boulons 41 ce qui permet d'entraîner de manière simultanée le capot mobile 31 et le second panneau 35 (voir figure 4).

Les premier et/ou second panneaux 33 et 35 peuvent être formés en une seule partie ou au contraire en plusieurs parties. Comme représenté sur les figures 2 et 3, chaque panneau 33 et 35 est formé de deux parties 36 et 38. Dans le cas du premier panneau 33, les parties 36a et 36b sont fixées entre elles de manière rigides sans autoriser de mobilité entre elles. La partie 36b en contact avec le capot mobile 31 n'est pas fixée à ce dernier si bien que lorsque le capot mobile 31 se déplace, les parties 36a et 36b restent fixes comme l'IFS 8, par rapport au capot mobile 31.

Dans le cas du second panneau mobile 35, les deux parties 38a et 38b ne sont pas fixées entre elles si bien qu'elles peuvent être mobiles l'une par rapport à l'autre. Ainsi, une partie 38a est fixée de manière rigide à l'IFS 8 et l'autre partie 38b est fixée de manière rigide au capot mobile 31. De ce fait, lorsque le capot 31 est mobile, il entraîne de manière avantageuse la partie 36b reliée audit capot 31. Le fait que le second panneau 35 et/ou le premier panneau 33 soient formés en plusieurs parties autorisent une transformation simple et rapide d'un panneau mobile en premier panneau et vice-versa par fixation appropriée des parties entre elles.

Les premier et second panneaux 33 et 35 peuvent être de forme sensiblement symétrique par rapport au sommet 14 de la nacelle 1 de l'invention ce qui permet d'avoir des premier et second panneaux 33 et 35 facilement interchangeables simplifiant encore davantage l'installation et la maintenance de la nacelle 1 de l'invention. En effet, pour changer de panneau 33 ou 35, il suffit de modifier la fixation des panneaux pour qu'un panneau devienne fixe ou mobile selon le besoin.

La nacelle 1 de l'invention peut comprendre un moyen de détrompage (non représenté) configuré pour indiquer sur la nacelle 1 de l'invention la position du second panneau 35, ce qui permet d'aider et de simplifier le montage des premier et second panneaux 33 et 35.

Le moyen de détrompage peut être un doigt coopérant avec un boulon interfacé, par exemple.

Selon un autre mode de réalisation représenté sur les figures 5 à 14, le second panneau (non représenté) et/ou le premier panneau 133 comporte au moins une partie 136b mobile en rotation par rapport à l'IFS 8 et configurée pour passer d'une position de fermeture empêchant l'échappement d'une partie du flux d'air 132 à une position d'ouverture autorisant un tel échappement.

De ce fait, la nacelle 1 de l'invention peut comporter un second panneau comportant une partie mobile en rotation par rapport à l'IFS 8 et un premier panneau ne comportant pas de telle partie. Il est également envisageable, que les premier et second panneaux 133 et 135 comprennent chacun une partie mobile 136b en rotation par rapport à l'IFS 8. De ce fait, on optimise encore davantage la surface disponible pour le flux d'air dévié.

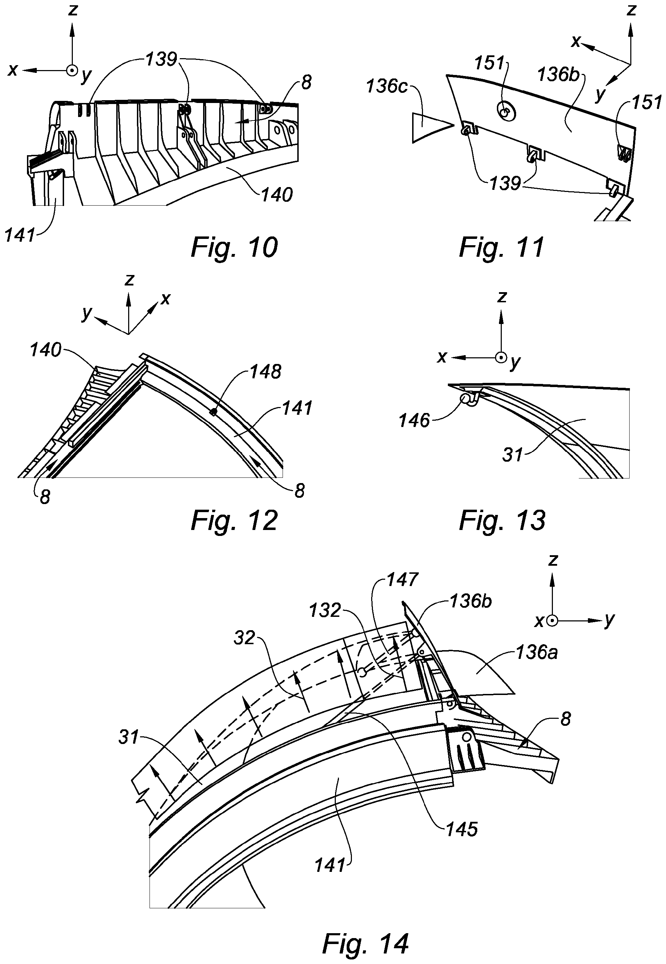

Dans le mode de réalisation de la figure 14, le premier panneau 133 comporte une partie mobile 136b autorisant l'échappement de la partie 132 du flux d'air dévié 32. Ainsi, la surface d'échappement du flux d'air dévié 32 est plus importante.

Les premier et/ou second panneaux 133 peuvent être formés de plusieurs parties 136a, 136b, 136c dont une partie 136b est mobile par rapport à l'IFS 8. Comme précédemment, le fait que le second panneau et/ou le premier panneau 133 soient formés en plusieurs parties autorisent une transformation simple et rapide d'un panneau mobile en un panneau fixe et vice-versa par fixation appropriée des parties entre elles.

Dans le cadre du second panneau (non représenté), la partie en contact avec le capot mobile peut être fixée à ce dernier de sorte à pouvoir coulisser selon l'axe longitudinal Δ de la nacelle 1 de l'invention. Pour ce faire, ladite partie entraînée par le capot mobile n'est pas fixée à la partie mobile en rotation.

La partie mobile en rotation 136b peut présenter toute forme et toute dimension adaptées pour permettre le dégagement du flux d'air dévié 132 désiré.

Il est possible de limiter l'angle de la partie mobile en rotation 136b du premier panneau 133 et/ou du second panneau. Pour ce faire, une bielle complémentaire peut être attaché sur le cadre avant.

La partie mobile 136b peut être mobile en rotation par l'intermédiaire de moyens de fixation fixés sur l'IFS 8 et sur le capot mobile 31. Comme représenté sur les figures 10 à 13, les moyens de fixation permettant la rotation de la partie mobile 136b peuvent être des dispositifs d'articulations, de type charnières 139, montés sur la partie mobile 136b et sur le cadre avant 140 de l'IFS. Ainsi, par exemple, la nacelle 1 de l'invention peut comporter un ou une pluralité de ces dispositifs 139, notamment trois.

Les moyens de fixation peuvent également comprendre plusieurs bielles, notamment deux bielles dont une première bielle 145 est fixée sur l'IFS 8, en particulier sur le cadre avant 141, par une attache-bielle 146, et une autre bielle 147 est fixée sur le capot mobile 31 par une autre attache-bielle 148. Les bielles 145 et 146 sont également reliées à la partie mobile 135 par l'intermédiaire d'attaches bielles 151. Ceci permet d'entraîner la rotation de la partie mobile 136b sensiblement simultanément avec le capot mobile 31.

Autrement dit, il est possible de transformer la translation du capot mobile 31 en une rotation du second panneau articulé.

De manière avantageuse dans ce mode de réalisation, il n'est pas nécessaire d'avoir un dispositif de détrompage si le second panneau mobile et le premier panneau fixe sont symétriques. En effet, si on veut éviter qu'une partie soit mobile en rotation, il suffit de fixer solidairement ladite partie à l'IFS 8 et de désengager les bielles 145 et 147. De ce fait, la désinstallation et l'installation des premier et premier panneaux 135 et 133 sont encore facilités.

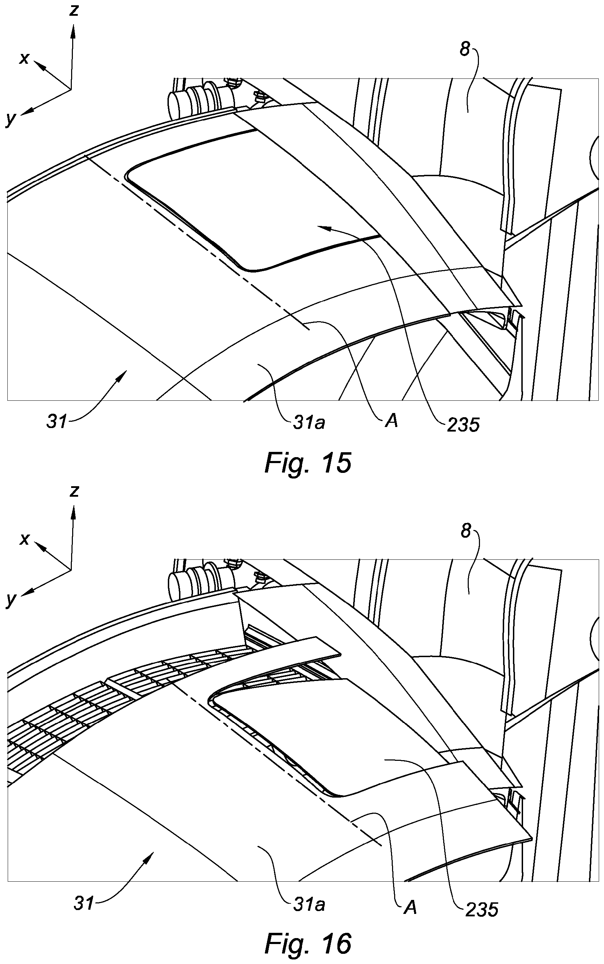

Dans le mode de réalisation des figures 15 et 16, au moins le second panneau 235 est monté pivotant sur la peau externe 31 a du capot mobile 31, autour d'un axe A sensiblement parallèle à l'axe Δ de la nacelle, et l'ouverture de ce panneau s'effectue vers l'intérieur du capot coulissant 31, lorsque ce dernier passe de sa position normale (figure 15) à sa position d'inversion de poussée (figure 16).

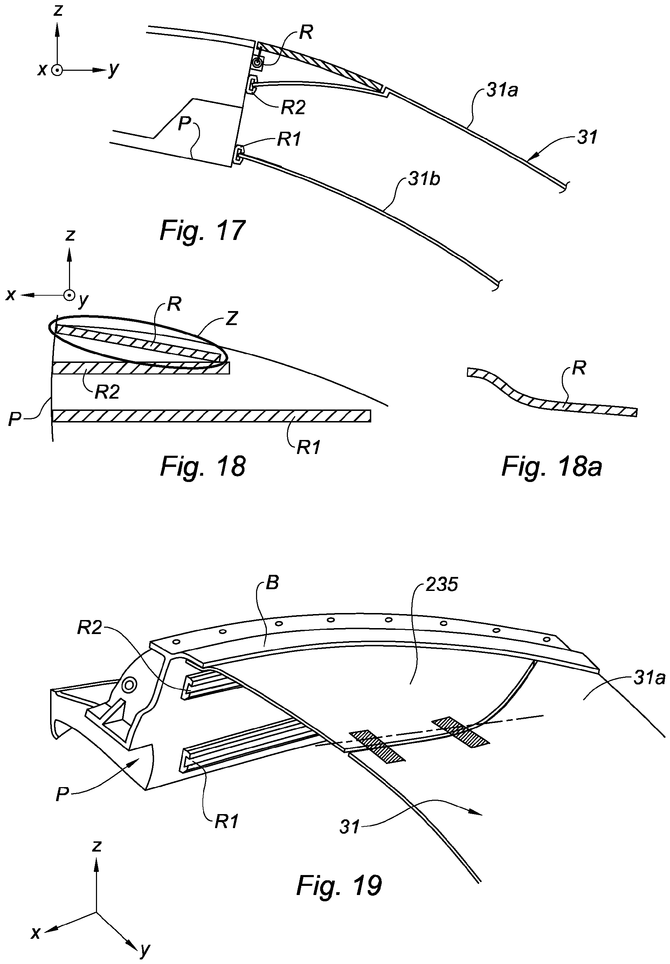

Comme cela est visible aux figures 17 et 18, l'ouverture du panneau 235 vers l'intérieur du capot coulissant 31 peut être obtenue par un guidage approprié de ce panneau au moyen d'un rail R solidaire de la poutre P qui se trouve au sommet de la nacelle, et qui permet sa liaison avec le pylône 14.

Plus précisément, comme cela est visible à la figure 18, ce rail R peut être incliné par rapport aux rails primaire R1 et secondaire R2 dans lesquels coulissent respectivement les peaux externe 31 a et interne 31 b du capot mobile 31, voire présenter toute forme appropriée telle que celle représentée à la figure 18a, permettant d'optimiser les écoulements d'air recherchés.

Dans les variantes représentées aux figures 19 à 25, le panneau 235 est guidé non plus par un rail, mais par une simple bordure B solidaire de la poutre P, contre laquelle il est rappelé de manière élastique, une bande de matériau à faible coefficient de frottement tel que du téflon T étant interposée entre cette bordure B et ce panneau 235.

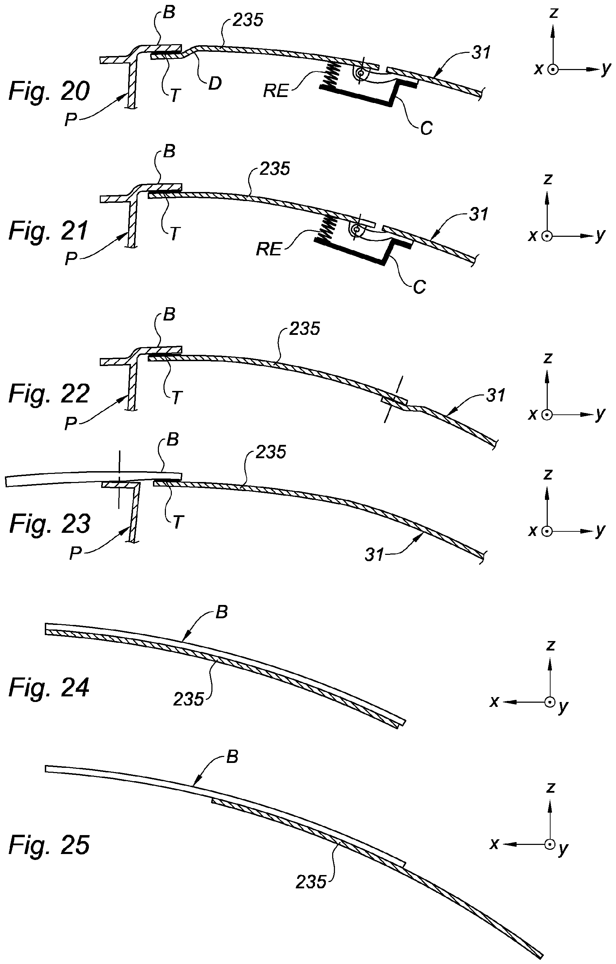

Plus précisément, dans les variantes des figures 20 et 21, des moyens de ressort RE, disposés dans la région où se trouvent les charnières C d'articulation du panneau 235 par rapport à la peau externe 31 a du capot 31, rappellent le panneau 235 au contact de la bordure B.

Dans la variante de la figure 20, le bord du panneau P qui est en contact avec la bordure B, présente un décrochement D permettant d'obtenir un profil aérodynamique optimal.

Dans la variante représentée aux figures 22 et 23 le panneau mobile 235 n'est plus articulé sur la peau externe 31 a du capot mobile 31, mais est maintenu en appui contre la bordure B du seul fait de sont élasticité.

Plus précisément, dans la variante de la figure 22, ce panneau 235 est une pièce rapportée, montée fixe sur la peau extérieure 31 a du capot mobile 31, et présentant une plus grande élasticité que ce capot.

Dans la variante de la figure 23, ce panneau 235 fait partie intégrante de la peau extérieure 31 a du capot mobile, et est formé dans une partie de cette peau extérieure qui présente une élasticité plus importante.

Comme cela est visible aux figures 24 et 25, lors du coulissement du capot mobile 31 de sa position normale (figure 24) vers sa position d'inversion de poussée (figure 25), le panneau 235 est guidé vers sa position d'ouverture par la bordure B.

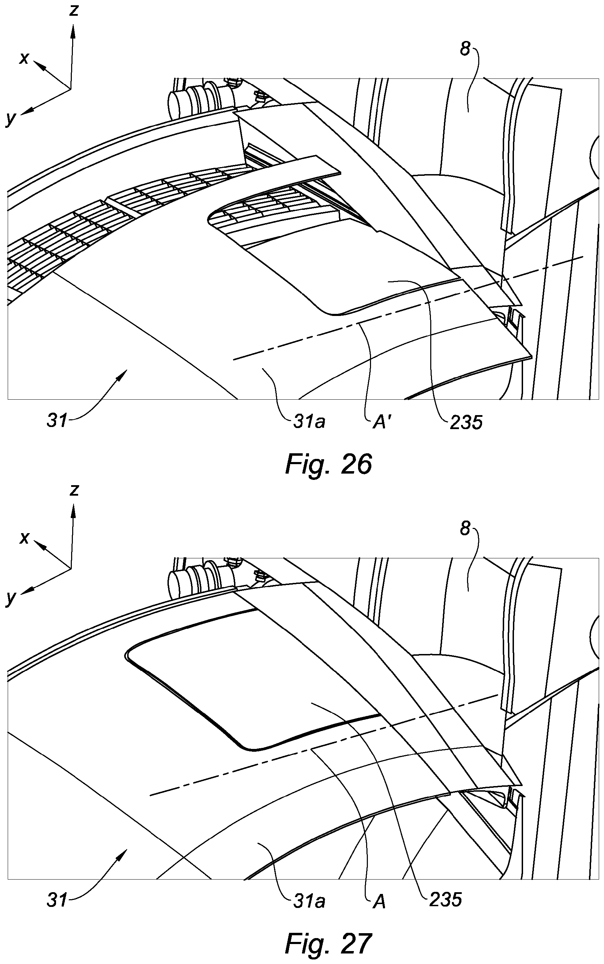

Dans le mode de réalisation des figures 26 et 27, le second panneau 235 est également monté pivotant sur la peau externe 31 a du capot coulissant 31, mais l'axe de rotation A' s'étend dans ce cas selon une direction sensiblement parallèle à l'axe Y.

## Revendications

1. Aéronef comportant une aile et une nacelle (1) pour un turboréacteur (6) double flux reliées par un pylône d'attache (16), la nacelle (1) comportant une section amont (2) par laquelle un flux d'air (12) est destiné à pénétrer, une section médiane (4) destinée à entourer la soufflante (5) du turboréacteur (6) et une section aval (7) comprenant une structure interne (8) et une structure externe (9) délimitant une veine (10) adaptée pour faire circuler le flux d'air (12), la structure externe (9) comprenant au moins un capot (31) monté sur la structure interne (8) et mobile suivant un axe longitudinal (Δ) de la nacelle (1) de sorte à permettre l'évacuation d'au moins une partie du flux d'air (12) circulant dans la veine (10) lors d'une phase d'inversion de poussée de la nacelle (1), la nacelle (1) présentant également un sommet (14) destiné à recevoir un pylone (16) d'attache d'une aile de l'aéronef,
ladite nacelle (1) comprenant :
- au moins un premier panneau (33 ; 133) monté sur la structure interne (8) d'un côté de la nacelle (1), par rapport au sommet (14), qui est disposé à proximité d'un élément (37) de l'aile de sorte à subir une interférence physique avec l'élément (37) de l'aile, pour limiter l'interférence physique dudit capot avec ledit élément d'aile lors d'une inversion de poussée, et
- au moins un second panneau (35 ; 135 ; 235) monté de l'autre côté de la nacelle (1), par rapport au sommet (14), ce panneau étant configuré de sorte à permettre l'évacuation d'une partie du flux d'air (12) pour maximiser l'air évacué de cet autre côté de la nacelle lors d'une inversion de poussée.

2. Aéronef selon la revendication 1, dans lequel ledit premier panneau est sélectionné dans le groupe comprenant un panneau (33 ; 133) fixé à la structure interne fixe (8) ou au moins en partie mobile par rapport à cette structure interne fixe (8), et un panneau (35 ; 135) fixé audit capot mobile (31) ou au moins en partie mobile par rapport à ce capot mobile (31).

3. Aéronef selon l'une des revendications 1 ou 2, dans lequel ledit second panneau est sélectionné dans le groupe comprenant :un panneau (35) fixé au capot mobile (31), un panneau (135) fixé à la structure interne (8) et comprenant au moins une partie (136b) mobile par rapport à cette structure interne (8), et un panneau (235) monté mobile sur ledit capot mobile (31).

4. Aéronef selon la revendication 3, dans lequel le second panneau (35)est solidaire dudit capot mobile (31).

5. Aéronef selon l'une quelconque des revendications précédentes, comprenant un moyen de détrompage configuré pour indiquer sur la nacelle (1) la position du second panneau (35).

6. Aéronef selon l'une quelconque des revendications 1 ou 2, dans lequel le premier panneau (133) et/ou le second panneau (135; 235) comportent au moins une partie mobile configurée pour passer d'une position de fermeture empêchant l'échappement d'une partie du flux d'air (12) à une position d'ouverture autorisant un tel échappement.

7. Aéronef selon la revendication 6, dans lequel la partie mobile du premier panneau (133) et/ou du second panneau (135 ; 235) est configurée pour prendre plusieurs positions intermédiaires.

8. Aéronef selon la revendication 6 ou 7, dans lequel la partie mobile (136b) est montée pivotante sur la structure interne (8) autour d'un axe sensiblement parallèle à l'axe de la nacelle.

9. Aéronef selon la revendication précédente, dans lequel ladite partie mobile (136b) est reliée à ladite structure interne (8) par des charnières (139) et plusieurs bielles dont au moins une première bielle (145) est fixée sur la partie mobile (136b) et sur le capot mobile (31) et une deuxième bielle (147) est fixée sur la partie mobile (136b) et sur la structure interne (8).

10. Aéronef selon la revendication 6 ou 7, dans lequel la partie mobile (235) est montée pivotante sur la peau extérieure (31 a) dudit capot mobile (31) et vers l'intérieur de cellui-ci, autour d'un axe choisi dans le groupe comprenant un axe sensiblement parallèle (A), et un axe sensiblement pependiculaire (A'), à l'axe (Δ) de la nacelle.

11. Aéronef selon la revendication 6 ou 7, dans lequel ladite partie mobile (235) est solidaire de la peau externe (31 a) dudit capot mobile (31), et mobile de par son élasticité.

12. Aéronef selon l'une des revendications 10 ou 11, dans lequel ladite partie mobile (235) est guidée par des moyens sélectionnés dans le groupe comprenant un rail (R) et une bordure (B) solidaires d'une poutre (P) située au sommet de ladite nacelle.

13. Aéronef selon l'une quelconque des revendications précédentes, dans lequel les premier et second panneaux (33, 35 ; 133, 135 ; 235) sont de forme sensiblement symétrique par rapport au sommet (14) de la nacelle (1).

## Patentansprüche

1. Luftfahrzeug, das einen Flügel und eine Gondel (1) für ein zweiflutiges Turbotriebwerk (6), die durch einen Befestigungsmast (16) verbunden sind, umfasst, wobei die Gondel (1) einen stromaufwärtigen Abschnitt (2) umfasst, durch den ein Luftstrom (12) eindringen soll, einen mittleren Abschnitt (4), der dazu bestimmt ist, das Gebläse (5) des Turbotriebwerks (6) zu umgeben, und einen stromabwärtigen Abschnitt (7), der eine interne Struktur (8) und eine externe Struktur (9) umfasst, die eine Zunge (10) abgrenzen, die angepasst ist, um den Luftstrom (12) zirkulieren zu lassen, wobei die externe Struktur (9) mindestens eine Haube (31) umfasst, die auf die interne Struktur (8) montiert und entlang einer Längsachse (Δ) der Gondel (1) derart beweglich ist, dass sie das Ableiten mindestens eines Teils des Luftstroms (12), der in der Zunge (10) zirkuliert, bei einer Schubumkehrphase der Gondel (1) erlaubt, wobei die Gondel (1) auch einen Scheitel (14) aufweist, der dazu bestimmt ist, einen Befestigungsmast (16) eines Flügels des Luftfahrzeugs zu erhalten,
wobei die Gondel (1) Folgendes umfasst:
- mindestens eine erste Tafel (33; 133), die auf die interne Struktur (8) einer Seite der Gondel (1) in Bezug zu dem Scheitel (14) montiert ist, der in der Nähe eines Elements (37) des Flügels derart angeordnet ist, dass er eine physische Interferenz mit dem Element (37) des Flügels erfährt, um die physische Interferenz der Haube mit dem Flügelelement bei einer Schubumkehr einzuschränken, und
- mindestens eine zweite Tafel (35; 135; 235), die auf der anderen Seite der Gondel (1) in Bezug zu dem Scheitel (14) montiert ist, wobei die Tafel derart konfiguriert ist, dass sie das Ableiten eines Teils des Luftstroms (12) erlaubt, um die Luft, die von dieser anderen Seite der Gondel abgeleitet wird, bei einer Schubumkehr zu maximieren.

2. Luftfahrzeug nach Anspruch 1, wobei die erste Tafel aus der Gruppe ausgewählt ist, die eine Tafel (33; 133) umfasst, die an der stationären inneren Struktur (8) befestigt oder zumindest zum Teil in Bezug zu dieser stationären internen Struktur (8) beweglich ist, und eine Tafel (35; 135), die an der beweglichen Haube (31) befestigt oder zumindest teilweise in Bezug zu dieser beweglichen Haube (31) beweglich ist.

3. Luftfahrzeug nach einem der Ansprüche 1 oder 2, wobei die zweite Tafel aus der Gruppe ausgewählt ist, die eine Tafel (35), die an der beweglichen Haube (31) befestigt ist, eine Tafel (135), die an der internen Struktur (8) befestigt ist und mindestens einen Teil (136b) umfasst, der in Bezug zu dieser internen Struktur (8) beweglich ist, und eine Tafel (235), die auf der beweglichen Haube (31) beweglich montiert ist, umfasst.

4. Luftfahrzeug nach Anspruch 3, wobei die zweite Tafel (35) fest mit der beweglichen Haube (31) verbunden ist.

5. Luftfahrzeug nach einem der vorhergehenden Ansprüche, das ein Unverwechselbarkeitsmittel umfasst, das ausgelegt ist, um auf der Gondel (1) die Position der zweiten Platte (35) anzugeben.

6. Luftfahrzeug nach einem der Ansprüche 1 oder 2, wobei die erste Tafel (133) und/oder die zweite Tafel (135; 235) mindestens einen beweglichen Teil umfassen, der ausgelegt ist, um von einer Verschlussposition, die das Austreten eines Teils des Luftstroms (12) verhindert, zu einer Öffnungsposition, die ein solches Austreten gestattet, überzugehen.

7. Luftfahrzeug nach Anspruch 6, wobei der bewegliche Teil der ersten Tafel (133) und/oder der zweiten Tafel (135; 235) ausgelegt ist, um mehrere Zwischenpositionen einzunehmen.

8. Luftfahrzeug nach Anspruch 6 oder 7, wobei der bewegliche Teil (136b) auf der internen Struktur (8) um eine Achse, die im Wesentlichen zu der Achse der Gondel parallel ist, schwenkend montiert ist.

9. Luftfahrzeug nach dem vorhergehenden Anspruch, wobei der bewegliche Teil (136b) mit der internen Struktur (8) durch Scharniere (139) und mehrere Pleuel verbunden ist, von welchen mindestens ein erstes Pleuel (145) auf dem beweglichen Teil (136b) und auf der beweglichen Haube (31) befestigt ist, und ein zweites Pleuel (147) auf dem beweglichen Teil (136b) und auf der internen Struktur (8) befestigt ist.

10. Luftfahrzeug nach Anspruch 6 oder 7, wobei der bewegliche Teil (235) auf der Außenhaut (31a) der beweglichen Haube (31) und zu deren Innerem um eine Achse schwenkend montiert ist, die aus der Gruppe ausgewählt ist, die eine im Wesentlichen parallele Achse (A) und eine im Wesentlichen zu der Achse (Δ) der Gondel rechtwinkelige Achse (A') umfasst.

11. Luftfahrzeug nach Anspruch 6 oder 7, wobei der bewegliche Teil (235) fest mit der Außenhaut (31 a) der beweglichen Haube (31) verbunden und aufgrund seiner Elastizität beweglich ist.

12. Luftfahrzeug nach einem der Ansprüche 10 oder 11, wobei der bewegliche Teil (235) durch Mittel geführt ist, die aus einer Gruppe ausgewählt sind, die eine Schiene (R) und einen Rand (B) umfasst, die fest mit einem Balken (P) verbunden sind, der sich auf dem Scheitel der Gondel befindet.

13. Luftfahrzeug nach einem der vorhergehenden Ansprüche, wobei die erste und die zweite Tafel (33, 35; 133, 135; 235) in Bezug zu dem Scheitel (14) der Gondel (1) im Wesentlichen symmetrische Form haben.

## Claims

1. An aircraft including a wing and a nacelle (1) for a bypass turbojet engine (6) connected by an attachment pylon (16), the nacelle (1) including an upstream section (2) by which an air flow (12) is intended to penetrate, a middle section (4) intended to surround the fan (5) of the turbojet engine (6) and a downstream section (7) comprising an inner structure (8) and an outer structure (9) delimiting a flow path (10) adapted to circulate the air flow (12), the outer structure (9) comprising at least one cowl (31) mounted on the inner structure (8) and movable along a longitudinal axis (Δ) of the nacelle (1) so as to allow the discharge of at least one portion of the air flow (12) circulating in the flow path (10) upon a thrust reverser phase of the nacelle (1), the nacelle (1) also having a top (14) intended to receive an attachment pylon (16) of a wing of the aircraft,
said nacelle (1) comprising:
- at least one first panel (33; 133) mounted on the inner structure (8) on one side of the nacelle (1), relative to the top (14) which is disposed near a member (37) of the wing so as to undergo a physical interference with the member (37) of the wing, in order to limit the physical interference of said cowl with said wing member upon a thrust reversal, and
- at least one second panel (35; 135; 235) mounted on the other side of the nacelle (1), relative to the top (14), this panel being configured so as to allow the discharge of a portion of the air flow (12) in order to maximize the air discharged from this other side of the nacelle upon a thrust reversal.

2. The aircraft according to claim 1, wherein said first panel is selected from the group comprising a panel (33; 133) fastened to the inner fixed structure (8) or at least in part movable relative to this inner fixed structure (8), and a panel (35; 135) fastened to said movable cowl (31) or at least in part movable relative to this movable cover (31).

3. The aircraft according to any of claims 1 or 2, wherein said second panel is selected in the group comprising: a panel (35) fastened to the movable cowl (31), a panel (135) fastened to the inner structure (8) and comprising at least one portion (136b) movable relative to this inner structure (8), and a panel (235) movably mounted on said movable cowl (31).

4. The aircraft according to claim 3, wherein the second panel (35) is secured to said movable cowl (31).

5. The aircraft according to any one of the preceding claims, comprising a foolproofing means configured to indicate, on the nacelle (1), the position of the second panel (35).

6. The aircraft according to any one of claims 1 or 2, wherein the first panel (133) and/or the second panel (135; 235) include(s) at least one movable portion configured to move from a closed position preventing the exhaust of a portion of the air flow (12) to an opened position allowing such an exhaust.

7. The aircraft according to claim 6, wherein the movable portion of the first panel (133) and/or the second panel (135; 235) is/are configured to take several intermediate positions.

8. The aircraft according to claim 6 or 7, wherein the movable portion (136b) is pivotally mounted on the inner structure (8) about an axis substantially parallel to the axis of the nacelle.

9. The aircraft according to the preceding claim, wherein said movable portion (136b) is connected to said inner structure (8) by hinges (139) and several connecting rods of which at least one first connecting rod (145) is fastened on the movable portion (136b) and on the movable cowl (31) and a second connecting rod (147) is fastened on the movable portion (136b) and on the inner structure (8).

10. The aircraft according to claim 6 or 7, wherein the movable portion (235) is pivotally mounted on the outer skin (31 a) of said movable cowl (31) and inwardly thereof, about an axis selected in the group comprising a substantially parallel axis (A), and a substantially perpendicular axis (A'), to the axis (Δ) of the nacelle.

11. The aircraft according to claim 6 or 7, wherein said movable portion (235) is secured to the outer skin (31 a) of said movable cowl (31), and movable due to its elasticity.

12. The aircraft according to any of claims 10 or 11, wherein said movable portion (235) is guided by means selected in the group comprising a rail (R) and a border (B) secured to a beam (P) located at the top of said nacelle.

13. The aircraft according to any one of the preceding claims, wherein the first and second panels (33, 35; 133, 135; 235) have a substantially symmetrical shape relative to the top (14) of the nacelle (1).
